# EUROPÄISCHE PATENTSCHRIFT

(11) **EP 0 560 033 B1**
(45) Veröffentlichungstag und Bekanntmachung des Hinweises auf die Patenterteilung: **12.04.1995**
(21) Anmeldenummer: 93101261.1
(22) Anmeldetag: 28.01.1993
(51) Int. Cl.: B29B 7/74, B29C 47/76, B29B 7/84

(54) **Verfahren und Vorrichtung zur Herstellung eines Polymeren aus thermoplastischem Polykondensat**
Process and apparatus for manufacturing polymers from a thermoplastic polycondensate
Procédé et dispositif pour la production des polymères de polycondensat

(30) Priorität: 13.03.1992 DE 4208099
(43) Veröffentlichungstag der Anmeldung: 15.09.1993
(73) Patentinhaber: Werner & Pfleiderer GmbH, 70469 Stuttgart (DE)
(72) Erfinder: Wohlfahrt-Laymann, Hendrik, Dipl.-Ing., W-70439 Stuttgart (DE)

(56) Entgegenhaltungen:
- EP-A- 0 516 936
- US-A- 3 787 160
- US-A- 4 107 787

## Beschreibung

Der Wiederaufarbeitung und Weiterverwertung von Kunststoffen kommt seit geraumer Zeit in zunehmendem Masse eine hohe Bedeutung zu, so daß auch bisher schon Wiederaufbereitungsverfahren von Polymeren aus thermoplastischem Polykondensat bekannt wurden.

Hierbei stellte sich schon frühzeitig das Problem einer ausreichenden Entfernung niedermolekularer Stoffe insbesondere Wasser, um einem Materialabbau entgegenzuwirken, um somit bei ausreichender Endviskosität des Polymeren ein einwandfreies Produkt zu erzielen.

Man war daher bestrebt, die auf der Oberfläche wie auch im Innern der Thermoplaste eingelagerte Feuchtigkeit vor der Nachkondensation durch Vortrocknen zu entziehen, wofür jedoch ein nicht unerheblicher Zeitaufwand erforderlich ist.

Bei einem bekannten Wiederaufbereitungsverfahren (DE-A-29 42 248) werden fein zerschnittene Fasern aus Polyäthylenterephtalat nach vorhergehender Verdichtung in einer Schneckenapparatur in eine Doppelschneckenpresse eingebracht, um während eines Aufschmelzvorgangs Wasser und flüchtige Verunreinigungen aus der Schmelze zu entfernen. Nach Filtration des Produkts erfolgt dessen Nachkondensation in einem Autoklaven unter vermindertem Druck, um durch die hierbei erzielte Viskositätserhöhung das erhaltene Polymer ohne Zusatz neuer Polymere verarbeiten zu können.

Der bei diesem relativ aufwendigen Verfahren bei mehrfach erfolgender Produktübergabe erforderliche Druckaufbau führt jedoch zu einem unerwünschten Molekülabbau.
Auch die Energieverluste über eine relativ lange Verfahrensstrecke sind beträchtlich.
Weiterhin ist aus der DE-A-21 28 468 ein Chargenmischer mit in einem trichterförmigen Behälter umlaufenden, sich gegenseitig und die Behälterwandung abstreifenden Schneckenwendeln zur Endverarbeitung bei einer Kondensationspolymerisation bekannt. Die chargenweise Aufbereitung führt hierbei nicht zu einer befriedigenden Qualitätsstufe des Polymeren, da ein ausreichender Aufschluß der Masse im kleinvolumigen Bereich nicht gegeben ist.

Aufgabe der Erfindung ist es, ohne getrennte Vortrocknung bei relativ geringer Arbeitslänge des zur Anwendung gelangenden Schneckenextruders die Herstellung eines hochwertigen bzw. neuwertigen Endproduktes zu ermöglichen.

Diese Aufgabe wird nach der Erfindung durch ein Verfahren gemäß Anspruch 1 und durch eine Vorrichtung gemäß Anspruch 5 gelöst. Zweckmäßige Weiterbildungen der Erfindung sind in den abhängigen Ansprüchen 2 bis 4 und 6 bis 9 beschrieben.

Das Verfahren kann trotz seiner kombiniert mehrstufigen Ausbildung in einer ohne weitere Hilfsmittel kompakten Vorrichtung durchgeführt werden. Dadurch, dass die Materialübergabe von der ersten Stufe zur nächstfolgenden Stufe unmittelbar und drucklos erfolgt, ist ein zwischenzeitlicher Molekularabbau ausgeschlossen.
Wesentlich an der Erfindung ist also die unmittelbare Verbindung des in einer ersten, mit gleichsinnig drehenden und dicht kämmenden Schnecken ausgebildeten Stufe durchgeführten Entgasungsprozesses mit dem in einer zweiten aus einem Misch- und Knetbehälter gebildeten Verfahrensstufe durchgeführten Entgasungsprozeß, wobei die Verweilzeit der Masse und damit die Produktqualität in dieser zweiten Stufe über die Mischwerkzeuge beeinflusst werden kann. Dadurch läßt sich der durch in der Vorstufe nicht ausreichend entfeuchtete Thermoplastmassen durch Molekülketten-Abbau eingetretene Viskositätsverlust dieser Massen wirksam ausgleichen.

In der Verbindung - Gleichdrallschneckenkneter mit einem Misch- und Knetbehälter zum vorgesehenen Zweck kann die Arbeitslänge des Gleichdrallschneckenkneters ohne Minderung der Produktqualität auf ein wirtschaftlich vertretbares Mass begrenzt werden. Auch die Gefahr eines Überflutens vorgesehener Vakuum-Entgasungseinrichtungen im Schneckenkneter bei hohem Produktdurchsatz ist nicht weiter gegeben.

In einer weiteren Ausbildung des Verfahrens nach Anspruch 2 wird ein stetig wechselnder großer Oberflächenbereich der Thermoplastmasse geschaffen, so daß eine spezifische Verweilzeit leicht eingehalten und die Kondensationsleistung gesteigert werden kann. Dies wird in einer weiteren Ausgestaltung des Verfahrens nach den Ansprüchen 3 und 4 weiter begünstigt.

Weiterhin ermöglicht eine Vorrichtung nach den Merkmalen des Anspruches 5 über eine relativ kurze Vorrichtungslänge eine umfassende Wasserausdampfung. Wichtig hierbei ist, daß die Wasserausdampfung in der Endstufe durch Schaffung einer großen sich ständig erneuernden Oberfläche in dieser Stufe zu einem Höchstmaß erfolgt, wobei das Aufbereitungsgut wie auch in der Vorstufe, danach und auch bei dessen Übergabe ständig bewegt und durch Abstreifen der Gehäusewandungen kein Absetzen des Gutes erfolgen kann. In diesem Zusammenhang ist die über die Förderwirkung der Mischwerkzeuge einstellbare Verweilzeit für das Aufbereitungsgut von wesentlichem Vorteil.

Ein Ausführungsbeispiel der Erfindung ist in der Zeichnung dargestellt und wird im folgenden näher beschrieben.

Hierin zeigt
- Fig.1: eine Seitenansicht teilweise in einem vertikalen Querschnitt durch eine Vorrichtung nach der Erfindung
- Fig. 2: einen horizontalen Querschnitt durch einen Teil der Vorrichtung nach Fig. 1 längs der Schnittlinie II-II
Ein Gleichdrallschneckenkneter 1 ist aus einem beheizbaren Gehäuse 2 gebildet, in dessen einander durchdringenden Bohrungen 3,4 ineinandergreifende Schnecken 5,6 gleichsinnig umlaufen. Die Schnecken werden hierbei durch eine nicht näher dargestellte Antriebseinrichtung mit gleicher Drehrichtung angetrieben.

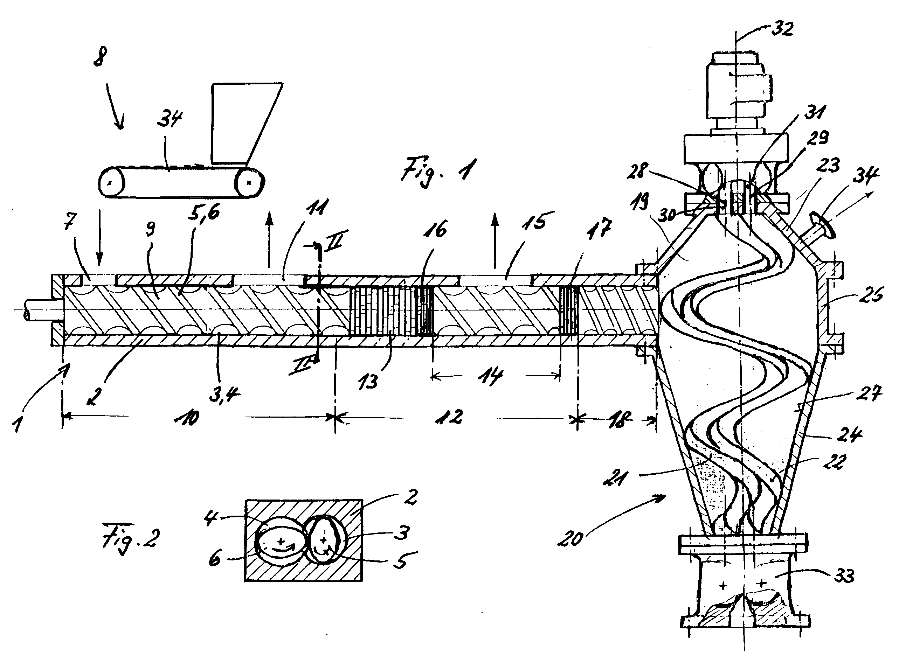

Im Gehäuse 2 befindet sich eine Zugabeöffnung 7 für thermoplastisches Polykondensat das dem Gleichdrallschneckenkneter 1 dosiert zugegeben wird. Die hierfür vorgesehene Dosiereinrichtung 8, die in üblicher Weise aus einer Dosierbandwaage 34 gebildet sein kann, ist so gesteuert, daß die jeweiligen Schneckengänge 9 der Schnecken 5,6 nur teilweise gefüllt sind.

Der Zugabeöffnung 7 ist ein Einzugs- und Förderabschnitt 10 nachgeordnet, in welchem dem Polykondensat entzogene Feuchtigkeit über eine Ausdampföffnung 11 abgeführt wird.
Weiter stromabwärts hiervon befindet sich ein Aufschmelz- und Entgasungsabschnitt 12, in welchem in einer Aufeinanderfolge an sich bekannte förderwirksame Knetscheiben 13 und ein weiterer Förderabschnitt 14 vorgesehen sind. Die Verfahrenslänge des Förderabschnitts 14 ist durch sogenannte Schmelzedichtungen begrenzt, die aus aufeinanderfolgenden und im wesentlichen nicht förderwirksamen Knetscheiben 16,17 gebildet sind. Das Gehäuse 2 weist in diesem Förderabschnitt 14 eine Abzugsöffnung 15 für unter Vakuum entzogenes Wasser und weitere niedermolekulare Stoffe auf.

Ein am Ende des Gehäuses 2 vorgesehener abschließender Förderabschnitt 18 mündet in den Innenraum 19 eines Mischbehälters 20, der mit Mischwerkzeugen 21, 22 ausgebildet ist. Der Mischbehälter 20 ist direkt an das Gehäuse 2 angeflanscht, so dass die Innenräume 3,4 bzw. 19 des Gehäuses 2 und des Mischbehälters 20 unmittelbar miteinander verbunden sind. Im übrigen ist der Innenraum 19 des Mischbehälters 20 luftdicht abgeschlossen, so daß hierin eine Entlüftung unter Vakuum erfolgen kann.

Der in herkömmlicher Weise beheizte Mischbehälter 20 ist als Doppelkegelbehälter ausgebildet, wobei dessen Kegelstümpfe 23, 24 im Bereich ihres größten lichten Querschnitts durch ein Zwischenstück 26 luftdicht verbunden sind.
Die Antriebseinrichtung 25 für die im Mischbehälter 20 gleichsinnig drehenden, sowie sich und die Behälterwand 27 abstreifenden Mischwerkzeuge 21, 22 ist am oberen Kegelstumpf 23 angeflanscht. Hierbei sind die Wellenachsen 28, 29 der Antriebswellen 30, 31 ortsfest und kongruent zur Längsachse 32 des Mischbehälters 20 angeordnet.
Am unteren Ende des Mischbehälters 20 befindet sich eine Schmelzepumpe 33 die zum Austrag des Endproduktes an den Kegelstumpf 24 angeflanscht ist.
Die wendelförmigen Mischwerkzeuge 21, 22 fördern den in den Mischbehälter 20 eingebrachten Thermoplast in den oberen Bereich des Mischbehälters 20, wobei in diesem längs der Behälterachse 32 eine homogene Durchmischung und ständige Oberflächenerneuerung des Fördergutes erfolgt. Die doppelkegelige Form des Mischbehälters 20 ermöglicht im Bereich des Zwischenstückes 26, d.h. in dessen größten lichten Querschnitts die Ausbildung einer grossen Entgasungsoberfläche, die durch die Förderwirkung der Mischwerkzeuge 21, 22 ständig erneuert wird, so daß die noch vorhandenen Restbestandteile an niedermolekularen Stoffen wie auch von Wasserdampf unter Vakuum ausgetrieben werden. Hierzu ist im oberen Kegelstumpf 23 eine Entgasungsöffnung 34 vorgesehen, die mit einer nicht näher dargestellten Evakuiereinrichtung in Verbindung steht.
Durch die nach oben gerichtete Förderwirkung der Mischwerkzeuge werden die niederviskosen Teile an thermoplastischem Kondensat nach oben getragen, während die hochviskosen schweren Teile sich im Bereich oberhalb der Schmelzepumpe 33 ansammeln und von dieser kontinuierlich eingezogen werden.

Je nach zuverarbeitendem Thermoplast kann es vorteilhaft sein, wenn in entsprechender Ausbildung der Wendeln die Mischwerkzeuge 21, 22 im unteren Drittel des Mischbehälters 20 ohne Drehrichtungsumkehr in entgegengesetzter Förderrichtung wirksam, d.h. in Richtung der Schwerkraft fördernd ausgebildet sind.
Die Schmelzepumpe 33 am Austrag des Mischbehälters 20 ermöglicht einen schonenden Produktransport zur nachfolgenden Konfektionierung.
Das Verfahren und die Vorrichtung eignen sich vorteilhaft für das Recycling von Kunststoff-Abfällen da hierbei der Kunststoff auf die Ausgangsviskosität der Neuware angehoben werden kann. Dabei kann Rohware gemischt mit Kunststoff-Abfällen aufbereitet werden.

### Beispiel:

Für die Herstellung von Polyethlentherephtalat werden Stapelfasern als Rohware mit einem Wassergehalt von 4000 ppm in die Zugabeöffnung eines Gleichdrallschneckenkneters mit 40 mm Schneckendurchmesser D so eindosiert, dass die Gänge der Gleichdrallschnecken zu etwa 50%-60% gefüllt sind.
Bei einer Schneckendrehzahl von 150 min-1 und einer Gehäuselänge von 24D wird das Polykondensat bei einer Temperierung auf 280°C in einem ersten Verfahrensabschnitt vorab entlüftet und in einem zweiten unmittelbar folgenden Verfahrensabschnitt oberhalb seines Schmelzepunktes weiter erwärmt und unter einem Vakuum von 1 mbar von weiteren Wasseranteilen befreit. Bei kontinuierlichem Durchlauf und einer drucklosen Übergabe des Polykondensats an den Mischbehälter bei einer Verweilzeit von etwa 40 min im Mischbehälter konnte die Eingangsviskosität von 0,6 dm³g auf eine Intrinsicviskosität in der Endstufe auf 0,95 dm³g heraufgesetzt werden. Bei der genannten Verweilzeit wurde das Polykondensat im Mischbehälter unter einem Vakuum von 1mbar bei einer insgesamt nach oben gerichteten Förderwirkung der Mischwerkzeuge stetig homogen gemischt. Der über die Zahnradpumpe erzielte Austrag entsprach einem Gesamtdurchsatz von ca. 3okg/h.

## Patentansprüche

1. Verfahren zur Herstellung eines Polymeren aus thermoplastischem Polykondensat mit einem zweiwelligen Gleichdrallschneckenkneter (1) mit dicht kämmenden Schnecken (5,6), indem das Polykondensat bei teilweise gefüllten Schneckengängen zudosiert innerhalb einer ersten Stufe (10, 12, 18) in einem ersten Verfahrensabschnitt zur Verdampfung eines ersten Wasseranteils bis unterhalb seines Schmelzepunktes erwärmt, entlüftet und in einen zweiten Verfahrensabschnitt gefördert wird, wobei in diesem das Polykondensat bis oberhalb seines Schmelzepunktes erwärmt und die erhaltene Schmelze unter Vakuum eingeschlossen und von weiteren Wasseranteilen sowie flüchtigen Bestandteilen befreit wird, und dass die Schmelze in eine dem Gleichdrallschneckenkneter (1) unmittelbar nachgeordnete zweite Stufe, die aus einem mit ineinandergreifenden und sich selbst reinigenden Mischwerkzeugen (21, 22) ausgebildeten Mischbehälter (20) gebildet ist, unter Beibehaltung des Vakuums gefördert und unter Ausdampfung von restlichen Wasseranteilen und flüchtigen Bestandteilen nachkondensiert und nach einer Verweildauer von 5-60 min durch eine Schmelzepumpe (33) aus dem Mischbehälter (20) ausgetragen wird.

2. Verfahren nach Anspruch 1, wobei die Schmelze nach Übergabe in die zweite Stufe in einem oberen Teilbereich des Mischbehälters (20) zunächst entgegen der Schwerkraft gefördert, im unteren Teilbereich die Schwerkraft unterstützend der Schmelzepumpe (33) zugeführt wird.

3. Verfahren nach Anspruch 1, wobei die Schmelze im zweiten Verfahrensabschnitt unter Vakuum <5mbar kondensiert wird.

4. Verfahren nach den Ansprüchen 1 und 2, wobei die Schmelze in der zweiten Stufe bei einem Vakumm <5mbar nachkondensiert wird.

5. Vorrichtung zur Herstellung eines Polymeren aus thermoplastischem Polykondensat bestehend aus einem horizontal angeordneten, zweiwelligen Gleichdrallschneckenkneter (1) mit in den längsaxial einander durchdringend angeordneten Bohrungen eines Gehäuses (2) dicht kämmenden Schnecken (5,6) die einen ersten Förderabschnitt (10) und nachfolgend einen Aufschmelz- und Entgasungsabschnitt (12) bilden, mit einer Zugabeöffnung (7) und nachfolgender Ausdampföffnung (11) im Förderabschnitt (10), wobei die Länge des Aufschmelz- und Entgasungsabschnittes (12) durch jeweils eine aus nicht förderwirksamen Knetscheiben (16,17) gebildete Schmelzedichtung begrenzt ist, und in Förderrichtung vor der ersten Schmelzedichtung förderwirksame Knetscheiben (13) vorgesehen sind, wobei das Gehäuse (2) im Entgasungsabschnitt (12) eine Abzugsöffnung (15) für den unter Vakuum erfolgenden Abzug flüchtiger Bestandteile aufweist, und dass an das Gehäuse (2) ein mit ineinandergreifenden sich selbst sowie die Behälterwandung (27) reinigenden Mischwerkzeugen (21,22) ausgebildeter Mischbehälter (20) angeflanscht ist, dessen Innenraum unmittelbar mit dem Innenraum des Schneckengehäuses (2) in Verbindung steht, und dass die vertikal zum Scheckengehäuse (2) drehbar angeordneten Mischwerkzeuge (21,22) entgegen der Schwerkraft förderwirksam ausgebildet sind und die Schmelze über eine mit dem Mischbehälter (20) verbundene Schmelzepumpe (33) zur weiteren Konfektionierung gefördert wird.

6. Vorrichtung nach Anspruch 5, wobei die Mischwerkzeuge (21,22) im unteren Behälterbereich in Richtung der Schwerkraft förderwirksam ausgebildet sind.

7. Vorrichtung nach Anspruch 1, wobei die Schmelzedichtung, aus zu einem Knetblock vereinigten Knetscheiben (16,17) gebildet ist, dessen Länge das 0,5-1 fache des Durchmessers der Schnecken (5,6) entspricht.

8. Vorrichtung nach Anspruch 1, wobei die aus mehreren Knetscheiben (13) gebildeten förderwirksamen Knetblöcke in ihrer Länge dem 2 bis 5fachen des Durchmessers der Schnecken (5,6) entsprechen.

9. Vorrichtung nach einem der Ansprüche 5 oder 6, wobei die Mischwerkzeuge (21,22) mit einer drehzahlveränderlichen Antriebseinrichtung (25) verbunden sind.

## Claims

1. Method for the production of a polymer from thermoplastic polycondensate with a two-shaft equihelical worm masticator (1) with closely meshing worms (5, 6) in that the polycondensate admetered with the worm helices partially filled within a first stage (10, 12, 18) is heated in a first method section to below its melting point for evaporation of a first water part, ventilated and conveyed in a second method section, in which the polycondensate is heated to above its melting point and the obtained melt is enclosed under vacuum and freed of further water parts as well as volatile components and that the melt is conveyed into a second stage, which is arranged directly downstream of the equihelical worm masticator (1) and is formed of a mixing container (20) constructed with self-cleaning mixing tools (21, 22), while maintaining the vacuum and evaporating residual water parts and recondensated volatile components and is discharged out of the mixing container (20) by a melt pump (33) after a dwell time of 5 to 60 minutes.

2. Method according to claim 1, in which the melt after transfer into the second stage is initially conveyed against the force of gravity in an upper partial region of the mixing container (20) and fed to the melt pump (33) while enhancing the force of gravity in the lower partial region of the mixing container (20).

3. Method according to claim 1, in which the melt is condensed under a vacuum of less than 5 millibars in the second method section.

4. Method according to the claims 1 and 2, in which the melt is recondensed under a vacuum of less than 5 millbars in the second method stage.

5. Device for the production of a polymer from thermoplastic polycondensate and consisting of an horizontally arranged two-shaft equihelical worm masticator (1) with worms (5, 6), which mesh closely in the bores, which are arranged to be interpenetrating along the axis, of the housing (2) and which form a first conveying portion (10) and following thereupon a melting and degasifying portion (12), with a charge opening (7) and a following evaporation opening (11) in the conveying portion (10), wherein the length of the melting and degasifying portion (12) is limited by a respective melt seal formed of masticating discs (16, 17), which are not effective for conveying, and masticating discs (13), which are effective for conveying, are provided in front of the first melt seal in conveying direction, wherein the housing (2) in the degasifying portion (12) displays a vent opening (15) for the drawing-off of volatile components taking place under vacuum and that a mixing container (20), which is constructed with interengaging mixing tools (21, 22), which are self-cleaning as well as cleaning the container wall (27), and the interior space of which stands directly in connection with the interior space of the worm housing (2), is flanged on at the housing (2) and that the mixing tools (21, 22), which are arranged to be rotatable vertically relative to the worm housing (2), are constructed to be effective for conveying against the force of gravity and the melt is conveyed for further fabrication by way of a melt pump (33) connected with the mixing container (20).

6. Device according to claim 5, in which the mixing tools (21, 22) in the lower container region are constructed to be effective for conveying in the direction of the force of gravity.

7. Device according to claim 5, in which the melt seal is formed of masticating discs (16, 17) into a masticating block, the length of which corresponds to 0.5 to 1 times the diameter of the worms (5, 6).

8. Device according to claim 5, in which the masticating blocks, which are formed of several masticating discs (13) and effective for conveying correspond in their length to 2 to 6 times the diameter of the worms (5, 6).

9. Device according to one of the claims 5 and 6, in which the mixing tools (21, 22) are connected with a drive equipment (25) of variable rotational speed.

## Revendications

1. Procédé de préparation d'un polymère formé à partir d'un polycondensat thermoplastique à l'aide d'un malaxeur (1 ) à deux arbres avec des vis de même pas, comportant des vis (5, 6) engrenant étroitement, procédé dans lequel le polycondensat est introduit de façon dosée, en remplissant partiellement les filets de vis, à l'intérieur d'un premier étage (10, 12, 19) et il est chauffé dans une première étape opératoire pour évaporer une première fraction d'eau, jusqu'au-dessous de son point de ramollissement, il est débarrassé de l'air et il est transporté dans une seconde étape opératoire, au cours de laquelle ce polycondensat est chauffé jusqu'au-delà de son point de fusion et la masse fondue obtenue est enfermée sous vide et est débarrassée d'une autre fraction d'eau ainsi que de fractions de constituants volatils, et dans un second étage disposé immédiatement en aval du malaxeur (1) comportant des vis de même pas et qui est formé d'un récipient mélangeur (20) comportant des outils mélangeurs (21, 22) engrenant mutuellement et qui se nettoient d'eux-mêmes, la masse fondue est transportée avec maintien de la dépression et, avec départ par évaporation des fractions restantes d'eau et des parties restantes des constituants volatils, cette masse est soumise à post-condensation et après un temps de séjour de 5 à 60 min, elle est extraite du récipient mélangeur (20) à l'aide d'une pompe (33) à masse fondue.

2. Procédé selon la revendication 1, dans lequel, après sa transmission dans le second étage, la masse fondue est tout d'abord transportée, à l'encontre de la gravité, dans une partie supérieure du récipient mélangeur (20) et cette masse est acheminée, dans la partie inférieure et à l'aide de la force de la gravité, vers la pompe (33) à masse fondue.

3. Procédé selon la revendication 1, selon lequel la masse fondue est condensée, dans la seconde étape opératoire, sous une dépression (correspondant à une pression) inférieure à 5 mbar.

4. Procédé selon les revendications 1 et 2, selon lequel la masse fondue est, dans le second étage, soumis à post-condensation sous une dépression (correspondant à une pression)de moins de 5 mbar.

5. Dispositif pour préparer un polymère formé à partir d'un polycondensat thermoplastique, ce dispositif consistant en un malaxeur (1) horizontal, à deux arbres de vis de même pas comportant des vis (5, 6) engrenant étroitement et passant par des trous disposés dans l'axe longitudinal d'une enveloppe ou corps (2), vis qui forment un premier tronçon de transport (10) et ensuite un tronçon (12) de chauffage jusqu'à fusion et de dégazage, avec une ouverture (7) d'addition et à la suite une ouverture d'évaporation (11) dans le tronçon de transport (10), la longueur du tronçon (12) de chauffage jusqu'à fusion et de dégazage étant délimitée par un joint ou une garniture de matière fondue formé(e) par des disques malaxeurs (16, 17) n'exerçant pas un effet de transport, les disques malaxeurs (13) exerçant un effet de transport étant prévus en amont, dans le sens du transport, de la première garniture ou du premier joint de masse fondue, le corps (2) présentant, dans le tronçon de dégazage (12) une ouverture (15) pour le prélèvement des constituants volatils résultant du dégagement sous vide, et le dispositif comporte un récipient mélangeur (20) monté par bridage sur le corps (2) et comportant des outils mélangeurs (21, 22) engrenant mutuellement et se nettoient d'eux-mêmes et nettoient la paroi (27) du récipient, dont l'espace intérieur communique directement avec l'espace intérieur de l'enveloppe (2) des vis, et les outils mélangeurs (21, 22) sont montés rotatifs verticalement par rapport à l'enveloppe (2) de vis et exercent un rôle de transport à l'encontre de la gravité, et par l'intermédiaire d'une pompe (33) pour masse fondue, reliée au récipient mélangeur (20), la masse fondue est transportée vers la poursuite de son traitement de transformation et/ou de chaudronnage.

6. Dispositif selon la revendication 5, dans lequel les outils mélangeurs (21, 22) sont agencés de manière à exercer un effet de transport dans la zone inférieure du récipient, dans le sens de l'effet de la gravité.

7. Dispositif selon la revendication 1, caractérisé en ce que le joint ou garniture d'étanchéité de masse fondue est formé(e)par des disques malaxeurs (16, 17) groupés et coopérant pour former un bloc malaxeur, dont la longueur représente 0,5 à 1 fois le diamètre des vis (5, 6).

8. Dispositif selon la revendication 1, dans lequel la longueur des blocs malaxeurs, à rôle de transport, formés par plusieurs disques malaxeurs (13) représente deux à cinq fois le diamètre des vis (5, 6).

9. Dispositif selon l'une des revendications 5 ou 6, dans lequel les outils mélangeurs (21, 22) sont reliés à un dispositif d'entraînement (25) dont on peut faire varier la vitesse de rotation.
